# EUROPEAN PATENT APPLICATION

(11) **EP 4 443 421 A1**
(43) Date of publication of application: **09.10.2024**
(21) Application number: 24165663.6
(22) Date of filing: 22.03.2024
(51) Int. Cl.: G10H 1/00, G10H 1/38

(54) **METHOD FOR GENERATING A SOUND EFFECT**

(30) Priority: 30.03.2023 GB 202304718
(71) Applicant: Sony Interactive Entertainment Europe Limited, London W1F 7LP (GB)
(72) Inventor: SCHEMBRI, Danjeli, London, W1F 7LP (GB); EDER, Michael, London, W1F 7LP (GB); COCKRAM, Philip, London, W1F 7LP (GB); THRESH, Lewis, London, W1F 7LP (GB); THWAITES, Joseph, London, W1F 7LP (GB); BARN, Lewis, London, W1F 7LP (GB); BUCHANAN, Christopher, London, W1F 7LP (GB)
(74) Representative: Gill Jennings & Every LLP

(57) **Abstract**

A computer-implemented method of generating a sound effect, comprising: obtaining a plurality of sounds; determining a common effect characteristic of the plurality of obtained sounds; obtaining a base sound; and generating the sound effect by applying the common effect characteristic to the base sound.

## Description

### FIELD OF THE INVENTION

The application relates to computer tools for assisting with sound design in video games and other multimedia. Specifically, the application relates to computer-implemented methods for generating a sound effect, and corresponding computer programs and apparatus.

### BACKGROUND

Sound design for a particular video game often has a human-recognisable "aesthetic" which is associated with that particular game or franchise, or a particular context within the game (such as a character or location).

However, replicating such an aesthetic (for example when producing a sequel game) can be a challenge, especially if the original sound designer is not involved. Similarly, maintaining an aesthetic wherever the relevant context appears can require significant manual labour by the sound designer.

As a result, it is desirable to provide a computer-implemented technique which can characterize a sound design aesthetic and produce further sounds having the aesthetic, either by generating new sounds or modify existing sounds.

### SUMMARY OF INVENTION

According to a first aspect, the following disclosure provides a computer-implemented method of generating a sound effect, comprising: obtaining a plurality of sounds; determining a common effect characteristic of the plurality of obtained sounds; obtaining a base sound; and generating the sound effect by applying the common effect characteristic to the base sound.

Optionally, the sound effect is for a user interface.

Optionally, the sound effect is a diegetic sound for a virtual environment.

Optionally, the sound effect is generated and played as a real-time stream.

Optionally, the common effect characteristic comprises at least one of a frequency range, a pitch shift, a key change, a timbre, a note sequence and a chord progression present in each of the obtained sounds.

Optionally, the common effect characteristic comprises a plug-in or digital signal processing effect used to generate each of the obtained sounds.

Optionally, determining the common effect characteristic comprises performing signal processing on the obtained sounds.

Optionally, determining the common effect characteristic comprises comparing one or more labels associated with the obtained sounds.

Optionally, determining the common effect characteristic comprises inputting the obtained sounds to an effect characterizing model, wherein the effect characterizing model is a model trained by machine learning.

Optionally, applying the common effect characteristic to the base sound comprises inputting the base sound to an effect applying model, wherein the effect applying model is a model trained by machine learning.

Optionally, each of the obtained sounds is associated with context data indicating a multimedia context for the sound, and the method comprises: determining a common effect characteristic for each of a set of respective pluralities of obtained sounds; determining a common context characteristic of the context data associated with each of the set of respective pluralities of obtained sounds; obtaining context data associated with the base sound; identifying a required common effect characteristic based on the context data of the base sound and the associations between common effect characteristics and common context characteristics; and generating the sound effect by applying the required common effect characteristic to the base sound.

Optionally, the context data comprises visual data of a scene in which the obtained sound is used.

According to a second aspect, the following disclosure provides a computer-program comprising instructions which, when executed by one or more processors, cause the processors to perform a method according to the first aspect.

According to a third aspect, the following disclosure provides a computer-readable storage medium storing instructions which, when executed by one or more processors, cause the processors to perform a method according to the first aspect.

According to a fourth aspect, the following disclosure provides a computer system comprising memory and one or more processors, the memory storing instructions which, when executed by the one or more processors, cause the processors to perform a method according to the first aspect.

### BRIEF DESCRIPTION OF DRAWINGS

Fig. 1 is a schematic block diagram illustrating a method according to an embodiment;
Fig. 2 is a schematic flow chart illustrating method steps of the embodiment;
Fig. 3 is a schematic block diagram illustrating a method according to a second embodiment;
Fig. 4 is a schematic flow chart illustrating method steps of the second embodiment;
Fig. 5 is a schematic block diagram illustrating a computer system according to an embodiment.

### DETAILED DESCRIPTION

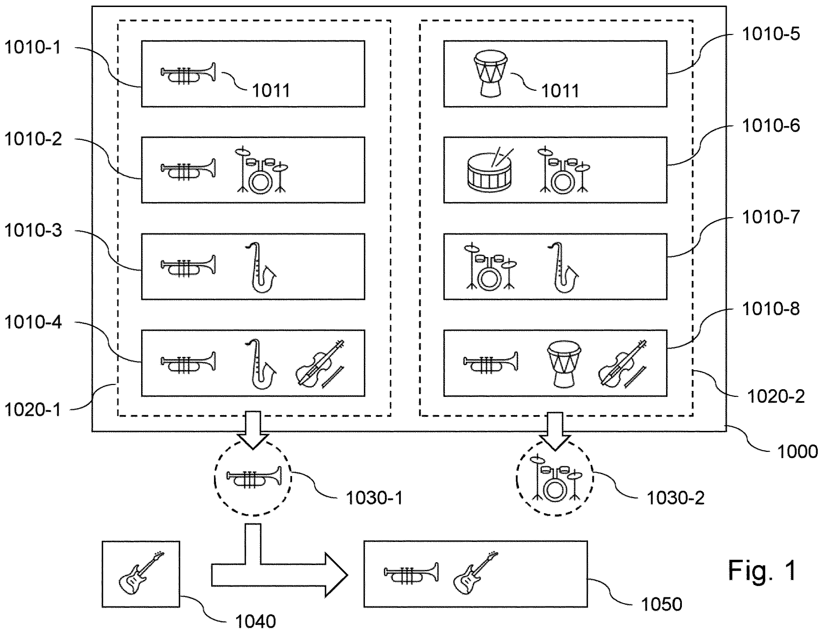

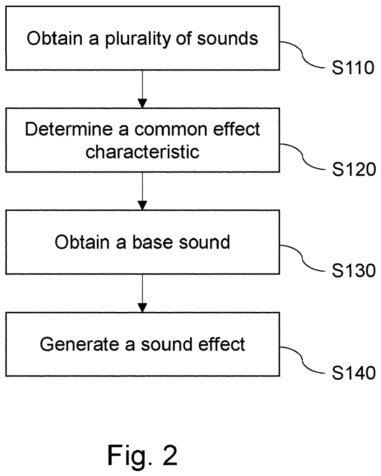

Fig. 1 is a schematic block diagram illustrating a method for generating a sound effect according to an embodiment that is implemented in a computer system. Fig. 2 is a schematic flow chart illustrating method steps of the embodiment.

Referring to Fig. 1, a collection of sounds 1010-1 to 1010-8 may be stored in a database 1000.

Each sound 1010-1 to 1010-8 may comprise a musical sound and/or a non-musical sound such as a footstep. Each sound has respective characteristics such as a frequency range (e.g. a lowest and highest significant frequency component), a frequency spectrum (e.g. specific frequencies that are significantly present or absent from the sound), a timbre (which may be correlated to an object or instrument generating the sound), a sequence (such as a note sequence or a chord progression), or one or more temporal events (such as an impulse or key change). Each sound may also have characteristics relating to how the sound was generated (for example using specific filters, plug-ins, pitch shifts and so on). One specific example of a notable characteristic is the sound of granular (FFT) processing which can create a grainy or stuttering aesthetic. Each sound may also have characteristics depending upon a space in which the sound was recorded or a virtual space in which the sound is intended to be played (e.g. echo, reverberation). In Fig. 1, different characteristics are illustrated schematically using musical instrument icons. As shown in Fig. 1, each sound may have a combination of characteristics. For example, each sound may comprise a combination of sound channels or tracks.

Each sound 1010-1 to 1010-8 may be stored in any sound data format such as an MP3 or MIDI file. Each sound 1010-1 to 1010-8 may additionally have metadata such as a file name, a folder location, and one or more labels indicating characteristics of the sound.

The computer system comprises one or more computer devices, and may comprise a network via which the computer devices can communicate. The database 1000 may be in a single memory or may be distributed across multiple memories or multiple computer devices in the computer system.

At a step S110, the computer system obtains a plurality of sounds 1020 (such as the group 1020-1 and 1020-2 illustrated in Fig. 1). For example, a user may manually select a plurality of sounds from the database 1000 and input the selection to the computer system. In another example, the plurality of sounds may be selected from the database 1000 automatically by the computer system based on a search parameter. This manual and/or automatic selection may be used to identify a plurality of sounds that share a desired aesthetic, so that the aesthetic can be characterized and applied to other sounds. In other embodiments, the database 1000 may be omitted, and obtaining the plurality of sounds 1020 may simply comprise receiving the plurality of sounds 1020.

At step S120, the computer system determines a common effect characteristic 1030 of the obtained plurality of sounds.

For example, group 1020-1 has a common effect characteristic 1030-1 indicated by a trumpet icon. This common effect characteristic may literally be a musical instrument (i.e. a timbre corresponding to that instrument) that is present in all of the plurality of sounds, or may be any of the other characteristics mentioned above (optionally including metadata).

Furthermore, the common effect characteristic may be a more complex "aesthetic" or "style". As an example, the common effect characteristic could be a music genre such as "Pop" or "Jazz", which is characterized by a combination of factors such as choice of instruments, speeds, chord sequences and so on.

Identifying a common effect characteristic of a plurality of sounds may in some embodiments require fuzzy logic, or may be too complex to express in terms of human-processable logic. For example, group 1020-2 in Fig. 1 does not have a single specific characteristic (schematically represented by instrument icons) which is present in all of the sounds 1010-5 to 1010-8 but does have a general common characteristic (schematically represented by different drum icons). In such embodiments, an effect characterizing model can be trained by machine learning to determine the common effect characteristic for a given plurality of sounds. The effect characterizing model may for example include one or more discrimination models, or a general classification model. For example, the effect characterizing model may comprise a convolutional neural network.

At step S130, the computer system obtains a base sound 1040. The base sound is any sound which will desirably be adapted to have the common effect characteristic. For example, the base sound may be a track designed by a user to be fairly similar to a pre-existing aesthetic, and this method may be applied to increase the degree to which the base sound conforms to the aesthetic. Alternatively, the base sound may be a re-used base sound that has previously been associated with the intended aesthetic. Alternatively, the base sound may be an independently generated sound that initially has nothing to do with the intended aesthetic.

At step S140, the computer system applies the determined common effect characteristic 1030-1 to the base sound 1040 to generate the sound effect 1050.

As a result of applying the common effect characteristic 1030-1 to the base sound 1040, a listener should perceive that the similarity between the sound effect 1050 the original plurality of sounds 1010-1 is greater than the similarity between the base sound 1040 and the original plurality of sounds 1010-1.

Step S140 may be an iterative process which ends when a user agrees that the required aesthetic is achieved. Alternatively, the computer system may automatically perform step S140 iteratively until a goal parameter is achieved. For example, the computer system may perform step S140 until a classifier model includes the sound effect 1050 in a classification which also applies to the plurality of sounds 1020-1. For example, the computer system may be configured to perform step S140 using a generative model such as a generative adversarial network.

Step S140 may also be applied multiple times to generate multiple sound effects from a single base sound. For example, applying the common effect characteristic may include a random component such that step S140 can produce a different sound effect 1050 each time it is applied to a given base sound 1040. This is particularly useful when the sound is diegetic sound in a virtual environment such as a video game. For example, if the database 1000 has five samples of footsteps on gravel, the method can identify a common effect characteristic for "footstep on gravel" and generate an unlimited number of unique sounds all of which sound like footsteps on gravel. Introducing a level of uniqueness to such sound effects increases the level of realism.

In some embodiments, steps S110 and S120 are performed asynchronously from steps S130 and S140. In one example, steps S110 and S120 may be performed repeatedly to generate a palette of common effect characteristics which are ready to apply subsequently to base sounds. The common effect characteristics may then more easily be applied dynamically, for example by changing a selected common effect characteristic for step S140 in response to a context.

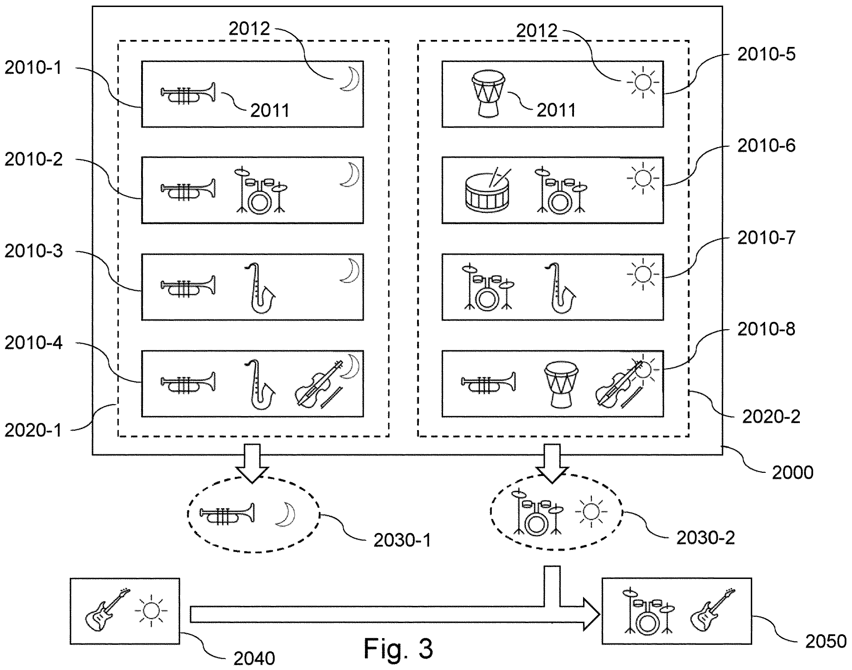

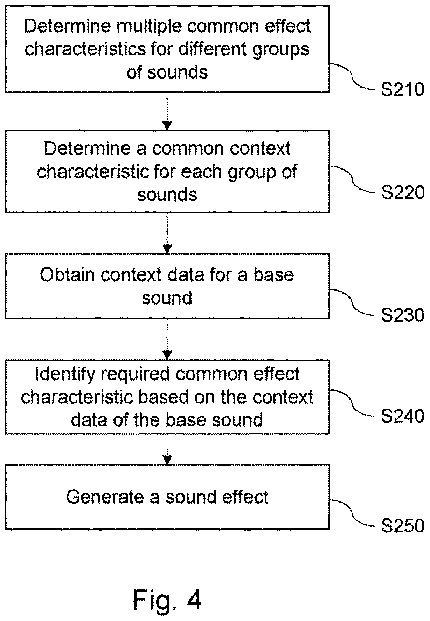

Fig. 3 is a schematic block diagram illustrating a method according to a second embodiment. Fig. 4 is a schematic flow chart illustrating method steps of the second embodiment.

In this embodiment, a multimedia context is taken into account. For example, in a video game, different locations, levels or characters may be associated with music having different aesthetics, and an aesthetic to apply to further sound effects can be selected based on the context.

More specifically, in Fig. 3 a database 2000 comprises sounds 2010-1 to 2010-8 which are similar to the sounds 1010-1 to 1010-8 of Fig. 1 except that they additionally comprise context data 2012.

Step S210 of this embodiment is similar to step S120, but repeated for each group 2020 of multiple groups of sounds 2010, to determine a common effect characteristic 2030 for each group.

At step S220, the computer system determines a common context characteristic 2030 for each group 2020 based on the context data 2012.

The context data 2012 may for example be metadata within a video game, indicating that the sounds of group 2020-1 are used in a first common context (for example a night-time context) and the sounds of group 2020-2 are used in a second common context (for example a day context). In that case, the common context characteristic may be metadata that is shared between each group.

Alternatively, rather than being metadata, the context data 2012 may comprise visual data of a scene in which the associated sound 2010 is used. In this case, the common context characteristic may be determined based on visual analysis of the scene associated with each sound.

At step S230, context data is obtained for the base sound 2040. At step S240, the context data of the base sound 2040 is matched to the common context characteristic of one of the groups 2020 in order to identify a required common effect characteristic associated with the one of the groups 2020. In the example of Fig. 3, the base sound 2040 matches the second common context (a day context) and so the required common effect characteristic is the common effect characteristic of a group 2020-2 of sounds used in the second common context.

Finally, step S250 is similar to step S140 of the previous embodiment, specifically applying the required common effect characteristic that was determined based on the context data.

As another example of a multimedia context, the aesthetic of a track output by background music player on a smartphone or tablet may be selected in dependence upon a choice of foreground application.

As a further example of a multimedia context, the background music of scenes in an entire movie may be analysed to determine a common effect characteristic. However, a more granular analysis could determine a common effect characteristic for background music of scenes featuring a specific character on-screen. This common effect characteristic may then be used to generate further sound effects for that character.

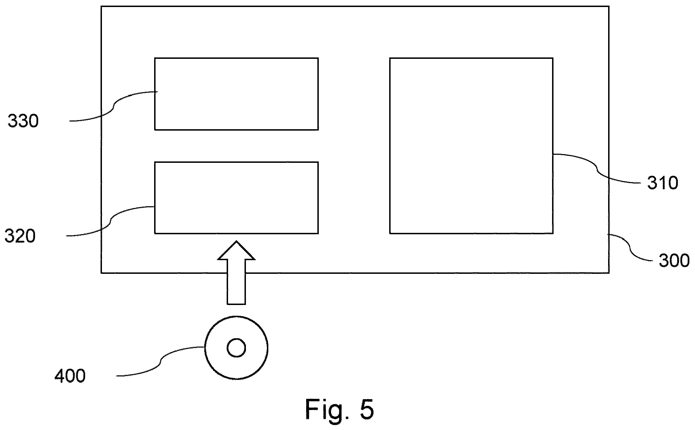

Fig. 5 is a schematic block diagram illustrating a computer system 300 according to an embodiment. The computer system 300 comprises one or more processors 310 configured to perform any of the above-described methods. The processors 310 may be specifically adapted to perform the method (e.g. ASICs) or may be general purpose processors configured to read and execute instructions from a memory 320. The memory 320 may store instructions which, when executed by the one or more processors, cause the processors to perform any of the above-described methods. The computer system 300 may further comprise a memory 330 configured to store a database 1000 as described above.

## Claims

1. A computer-implemented method of generating a sound effect, comprising:
obtaining a plurality of sounds;
determining a common effect characteristic of the plurality of obtained sounds;
obtaining a base sound; and
generating the sound effect by applying the common effect characteristic to the base sound.

2. A method according to claim 1, wherein the sound effect is for a user interface.

3. A method according to claim 1, wherein the sound effect is a diegetic sound for a virtual environment.

4. A method according to claim 2 or claim 3, wherein the sound effect is generated and played as a real-time stream.

5. A method according to any preceding claim, wherein the common effect characteristic comprises at least one of a frequency range, a pitch shift, a key change, a timbre, a note sequence and a chord progression present in each of the obtained sounds.

6. A method according to any preceding claim, wherein the common effect characteristic comprises a plug-in or digital signal processing effect used to generate each of the obtained sounds.

7. A method according to any preceding claim, wherein determining the common effect characteristic comprises performing signal processing on the obtained sounds.

8. A method according to any preceding claim, wherein determining the common effect characteristic comprises comparing one or more labels associated with the obtained sounds.

9. A method according to any preceding claim, wherein determining the common effect characteristic comprises inputting the obtained sounds to an effect characterizing model, wherein the effect characterizing model is a model trained by machine learning.

10. A method according to any preceding claim, wherein applying the common effect characteristic to the base sound comprises inputting the base sound to an effect applying model, wherein the effect applying model is a model trained by machine learning.

11. A method according to any preceding claim, wherein each of the obtained sounds is associated with context data indicating a multimedia context for the sound, and the method comprises:
determining a common effect characteristic for each of a set of respective pluralities of obtained sounds;
determining a common context characteristic of the context data associated with each of the set of respective pluralities of obtained sounds;
obtaining context data associated with the base sound;
identifying a required common effect characteristic based on the context data of the base sound and the associations between common effect characteristics and common context characteristics; and
generating the sound effect by applying the required common effect characteristic to the base sound.

12. A method according to claim 11, wherein the context data comprises visual data of a scene in which the obtained sound is used.

13. A computer-program comprising instructions which, when executed by one or more processors, cause the processors to perform a method according to any of claims 1 to 12.

14. A computer-readable storage medium storing instructions which, when executed by one or more processors, cause the processors to perform a method according to any of claims 1 to 12.

15. A computer system comprising memory and one or more processors, the memory storing instructions which, when executed by the one or more processors, cause the processors to perform a method according to any of claims 1 to 12.
